# EUROPEAN PATENT APPLICATION

(11) **EP 4 645 037 A1**
(43) Date of publication of application: **05.11.2025**
(21) Application number: 25170909.3
(22) Date of filing: 16.04.2025
(51) Int. Cl.: G06F 3/01

(54) **VIRTUAL SPACE MODIFICATION**

(30) Priority: 03.05.2024 GB 202406198
(71) Applicant: Nokia Technologies Oy, 02610 Espoo (FI)
(72) Inventor: ERONEN, Antti Johannes, Tampere (FI); LEHTINIEMI, Arto Juhani, Lempäälä (FI); VILERMO, Miikka Tapani, Siuro (FI); LILJEROOS, Ari-Pekka, Pirkkala (FI)
(74) Representative: Nokia EPO representatives

(57) **Abstract**

An apparatus, method and computer program for virtual space modification are disclosed. The method may comprise identifying one or more objects of a virtual space which a user is likely to interact with, wherein the one or more objects have respective positions in the virtual space, determining that the virtual space is larger than a real-world play area in which the user consumes or will consume the virtual space, wherein a respective position of at least one object of the identified one or more objects is such that at least part of said at least one object will be presented outside of the real-world play area, and modifying at least part of the virtual space such that the identified one or more objects, including said at least one object, will be presented substantially inside of the real-world play area.

## Description

### Field

Examples embodiments relate to modifying at least part of virtual space.

### Background

Virtual reality (VR) is a rapidly developing area of technology in which video and/or content is provided to a user device which may comprise a display system for the output of the video content and one or more loudspeakers for the output of the audio content. The user device may for example comprise a head-worn device. The user device may be provided with a live or stored feed from a content source, the feed comprising data representing a virtual space for presentation via the user device. A virtual space may comprise any computer-generated version of a space in which a user can be immersed and. The virtual space may comprise one or more virtual objects. The user may, during presentation of the virtual space in which they are immersed, be able to interact with at least some of the one or more virtual objects. Whereas a VR virtual space may be completely virtual when output to a display system, a mixed reality (MR) or augmented reality (AR) virtual space may combine the current real-world space with computer-generated content.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

A first aspect provides an apparatus comprising: means for identifying one or more objects of a virtual space which a user is likely to interact with, wherein the one or more objects have respective positions in the virtual space; means for determining that the virtual space is larger than a real-world play area in which the user consumes or will consume the virtual space, wherein a respective position of at least one object of the identified one or more objects is such that at least part of said at least one object will be presented outside of the real-world play area; and means for modifying at least part of the virtual space such that the identified one or more objects, including said at least one object, will be presented substantially inside of the real-world play area.

In some example embodiments, the identified one or more objects of the virtual space may comprise one or more objects which the user has previously interacted with at least a threshold number of times.

In some example embodiments, the identified one or more objects of the virtual space may comprise one or more objects which one or more other users have previously interacted with at least a threshold number of times.

In some example embodiments, the identified one or more objects of the virtual space may comprise one or more objects having at least one associated property that matches an interaction preference of the user.

In some example embodiments, the apparatus may further comprise: means for providing a heat map associated with the virtual space, wherein the heat map comprises a two or three -dimensional representation of the virtual space, which includes a plurality of objects at respective positions in the virtual space, at least some of which is or are updated to indicate the identified one or more objects of the virtual space.

In some example embodiments, the modifying may comprise: determining a crop area of the virtual space, associated with a user position with respect to the virtual space, wherein the crop area corresponds to, or will fit within, the real-world play area, wherein at least part of the virtual space is modified such that the respective positions of the identified one or more objects, including said at least one object, are substantially within the crop area.

In some example embodiments, the virtual space may be modified by moving at least part of the virtual space with respect to the crop area such that the respective positions of the identified one or more objects, including said at least one object, are substantially within the crop area.

In some example embodiments, the virtual space may be modified by: identifying at least one insignificant region within the crop area between the user position and the respective position of said at least one object, and moving the respective position of said at least one object into the identified at least one insignificant region.

In some example embodiments, the at least one insignificant region may comprise at least one of: a region associated with an object which is other than the identified one or more objects; or a region that comprises no objects.

In some example embodiments, the virtual space may be modified by reducing a scale of at least part of the virtual space such that the respective positions of the identified one or more objects, including said at least one object, are within the crop area.

In some example embodiments, the virtual space may be modified by reducing a scale of only one dimension of the at least part of the virtual space.

In some example embodiments, the identified one or more objects of the virtual space may comprise one or more objects which the user or one or more other users has or have previously interacted with in the virtual space by at least one of: approaching the one or more objects; touching the one or more objects; moving the one or more objects; looking in a direction towards the one or more objects for at least a threshold time; making a gesture or speaking towards the one or more objects; or modifying a parameter associated with the one or more objects.

In some example embodiments, the one or more objects of the virtual space may comprise one or more audio and/or video objects.

In some example embodiments, the apparatus may be comprised in a user device.

A second aspect provides a method comprising: identifying one or more objects of a virtual space which a user is likely to interact with, wherein the one or more objects have respective positions in the virtual space; determining that the virtual space is larger than a real-world play area in which the user consumes or will consume the virtual space, wherein a respective position of at least one object of the identified one or more objects is such that at least part of said at least one object will be presented outside of the real-world play area; and modifying at least part of the virtual space such that the identified one or more objects, including said at least one object, will be presented substantially inside of the real-world play area.

In some example embodiments, the identified one or more objects of the virtual space may comprise one or more objects which the user has previously interacted with at least a threshold number of times.

In some example embodiments, the identified one or more objects of the virtual space may comprise one or more objects which one or more other users have previously interacted with at least a threshold number of times.

In some example embodiments, the identified one or more objects of the virtual space may comprise one or more objects having at least one associated property that matches an interaction preference of the user.

In some example embodiments, the method may further comprise providing a heat map associated with the virtual space, wherein the heat map comprises a two or three - dimensional representation of the virtual space, which includes a plurality of objects at respective positions in the virtual space, at least some of which is or are updated to indicate the identified one or more objects of the virtual space.

In some example embodiments, the modifying may comprise: determining a crop area of the virtual space, associated with a user position with respect to the virtual space, wherein the crop area corresponds to, or will fit within, the real-world play area, wherein at least part of the virtual space is modified such that the respective positions of the identified one or more objects, including said at least one object, are substantially within the crop area.

In some example embodiments, the virtual space may be modified by moving at least part of the virtual space with respect to the crop area such that the respective positions of the identified one or more objects, including said at least one object, are substantially within the crop area.

In some example embodiments, the virtual space may be modified by: identifying at least one insignificant region within the crop area between the user position and the respective position of said at least one object, and moving the respective position of said at least one object into the identified at least one insignificant region.

In some example embodiments, the at least one insignificant region may comprise at least one of: a region associated with an object which is other than the identified one or more objects; or a region that comprises no objects.

In some example embodiments, the virtual space may be modified by reducing a scale of at least part of the virtual space such that the respective positions of the identified one or more objects, including said at least one object, are within the crop area.

In some example embodiments, the virtual space may be modified by reducing a scale of only one dimension of the at least part of the virtual space.

In some example embodiments, the identified one or more objects of the virtual space may comprise one or more objects which the user or one or more other users has or have previously interacted with in the virtual space by at least one of: approaching the one or more objects; touching the one or more objects; moving the one or more objects; looking in a direction towards the one or more objects for at least a threshold time; making a gesture or speaking towards the one or more objects; or modifying a parameter associated with the one or more objects.

In some example embodiments, the one or more objects of the virtual space may comprise one or more audio and/or video objects.

In some example embodiments, the method may be performed in a user device.

A third aspect of provides a computer program comprising a set of instructions which, when executed on an apparatus, is configured to cause the apparatus to carry out a method comprising: identifying one or more objects of a virtual space which a user is likely to interact with, wherein the one or more objects have respective positions in the virtual space; determining that the virtual space is larger than a real-world play area in which the user consumes or will consume the virtual space, wherein a respective position of at least one object of the identified one or more objects is such that at least part of said at least one object will be presented outside of the real-world play area; and modifying at least part of the virtual space such that the identified one or more objects, including said at least one object, will be presented substantially inside of the real-world play area.

The third aspect may also comprise any feature described in relation to the second aspect.

A fourth aspect of the invention provides a non-transitory computer-readable medium having stored thereon computer-readable code, which, when executed by at least one processor, causes the at least one processor to perform a method, comprising: identifying one or more objects of a virtual space which a user is likely to interact with, wherein the one or more objects have respective positions in the virtual space; determining that the virtual space is larger than a real-world play area in which the user consumes or will consume the virtual space, wherein a respective position of at least one object of the identified one or more objects is such that at least part of said at least one object will be presented outside of the real-world play area; and modifying at least part of the virtual space such that the identified one or more objects, including said at least one object, will be presented substantially inside of the real-world play area.

The fourth aspect may also comprise any feature described in relation to the second aspect.

A fifth aspect of the invention provides an apparatus, the apparatus having at least one processor and at least one memory having computer-readable code stored thereon which when executed controls the at least one processor to: identify one or more objects of a virtual space which a user is likely to interact with, wherein the one or more objects have respective positions in the virtual space; determine that the virtual space is larger than a real-world play area in which the user consumes or will consume the virtual space, wherein a respective position of at least one object of the identified one or more objects is such that at least part of said at least one object will be presented outside of the real-world play area; and modify at least part of the virtual space such that the identified one or more objects, including said at least one object, will be presented substantially inside of the real-world play area.

The fifth aspect may also comprise any feature described in relation to the second aspect.

### Brief Description of the Drawings

The invention will now be described, by way of non-limiting example, with reference to the accompanying drawings, in which:
FIG. 1 illustrates a display system useful for understanding example embodiments;
FIG. 2 illustrates the FIG. 1 display system as part of a networked system;
FIG. 3 illustrates a plan view of a first virtual space useful for understanding example embodiments;
FIG. 4 illustrates the first virtual space with an overlaid play area;
FIG. 5 is a flow diagram indicating operations in accordance with some example embodiments;
FIG. 6 illustrates a plan view of a second virtual space with overlaid play area in accordance with some example embodiments;
FIG. 7 illustrates a modified version of the second virtual space in accordance with some example embodiments;
FIG. 8 illustrates a plan view of a third virtual space with overlaid play area in accordance with some example embodiments;
FIG. 9 illustrates a part modified version of the third virtual space in accordance with some example embodiments;
FIG. 10 illustrates a final modified version of the third virtual space in accordance with some example embodiments;
FIG. 11 illustrates a plan view of a fourth virtual space with overlaid play area in accordance with some example embodiments;
FIG. 12 illustrates the fourth virtual space with overlaid insignificant region in accordance with some example embodiments;
FIG. 13 illustrates a modified version of the fourth virtual space in accordance with some example embodiments;
FIG. 14 illustrates an apparatus which may be configured to operate in accordance with some example embodiments; and
FIG. 15 illustrates a non-transitory computer-readable medium for storing computer-readable instructions for causing the FIG. 14 apparatus to operate in accordance with some example embodiments.

### Detailed Description

Example embodiments relate to modifying at least part of virtual space, for example a virtual space that comprises one or more audio and/or video objects.

The term object may refer to a virtual object, as opposed to a real-world object, and an object may comprise a video object, audio object or an object which comprises both video and audio content.

A virtual space may comprise any form of extended reality (XR) content such as virtual reality (VR), mixed reality (MR) or augmented reality (AR) content.

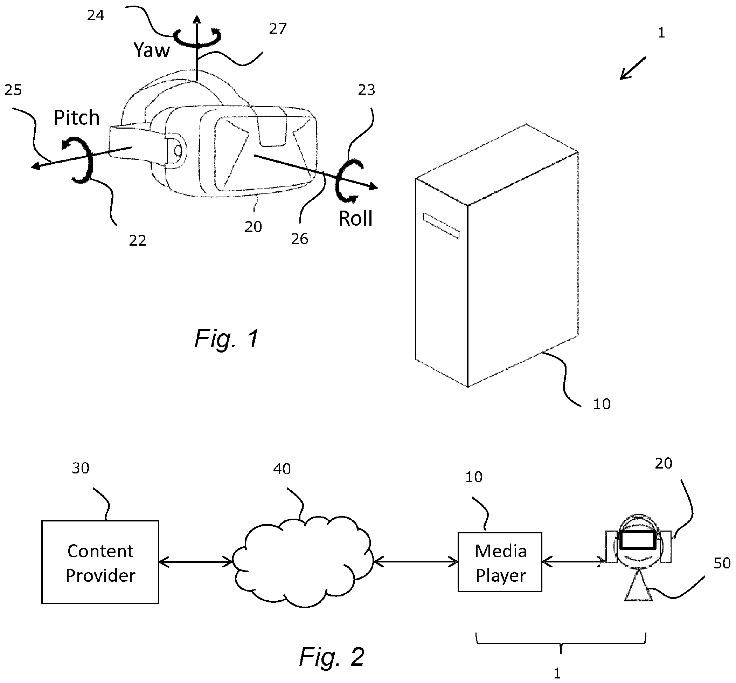

FIG. 1 illustrates a VR display system 1 which represents user-end equipment. The VR display system 1 includes a user device in the form of a VR headset 20 for displaying video data representing a virtual space, and a VR media player 10 for rendering the video data on the VR headset 20. A virtual space may comprise any computer-generated version of a space, for example a captured real-world space in which a user can be immersed. In some examples, the virtual space may be entirely computer-generated, i.e., not captured. The VR headset 20 may be of any suitable type. The VR headset 20 may be configured to display the rendered video data using a pair of screens that in use locate in front of the user's eyes. The VR headset 20 may also comprise one or more loudspeakers which in use locate adjacent the user's ears for outputting audio data that may be associated with the video data. As such, the user may be immersed in a virtual space.

The VR headset 20 may receive the video and/or audio data from the VR media player 10. The VR media player 10 may be part of a separate device which is connected to the VR headset 20 by a wired or wireless connection. Alternatively, the VR media player 10 may form part of the VR headset 20. For example, the VR media player 10 may comprise a mobile phone, smartphone or tablet computer configured to play content through its display. For example, the VR media player 10 may be a touchscreen device having a large display over a major surface of the device, through which the video data can be displayed. The VR media player 10 may be inserted into a holder of a VR headset 20. With such VR headsets 20, a smart phone or tablet computer may display video data which is provided to a user's eyes via respective lenses in the VR headset 20. The VR display system 1 may also include hardware configured to convert the device to operate as part of VR display system 1. Alternatively, the VR media player 10 may be integrated into the VR headset 20. The VR media player 10 may be implemented in software. In some example embodiments, a device comprising VR media player software is referred to as the VR media player 10.

The VR display system 1 may include means for determining the spatial position of the user and/or orientation of the user's head. This may be by means of determining the spatial position and/or orientation of the VR headset 20. Over successive time frames, a measure of movement may therefore be calculated and stored. Such means may comprise part of the VR media player 10. Alternatively, the means may comprise part of the VR headset 20. For example, the VR headset 20 may incorporate motion tracking sensors which may include at least one of gyroscopes, accelerometers or structured light systems. The sensors may generate position data from which a current visual field-of-view (FOV) is determined and updated by the VR media player 10 as the user, and so the VR headset 20, changes position and/or orientation.

As shown in FIG. 1, determining the spatial position of the user and/or orientation of the user's head may involve measurements of at least one of pitch 22, roll 23 and yaw 24 and possibly translational movement in Euclidean space along side-to-side, front-to-back and up-and-down axes 25, 26, 27. In this way, the user may explore the virtual space, potentially in three-dimensions, and in such a way that what is transmitted by the VR media player 10 to the VR headset 20 in terms of video and/or audio data may change responsive to a change in spatial position and/or orientation. For example, if the user rotates their head by ninety degrees clockwise, the presented virtual space may be rotated ninety degrees anticlockwise in terms of both video and audio content such that certain objects in the virtual space appear fixed. For example, if the user moves towards a particular object, the object may enlarge as the user gets closer to it, and vice versa. For example, the user may be able to move around a particular object to view it from multiple angles.

FIG. 2 illustrates a system in which a content provider 30 may store and transmit streaming video and/or audio data for output to the VR headset 20. The VR headset 20 is shown associated with a user 50. Responsive to receive or download requests sent by the VR media player 10, the content provider 30 may transmit or stream the video and/or audio data over a data network 40, which may be any network, for example an IP network such as the Internet. The content provider 30 may or may not be the location or system where the VR video is captured, created and/or processed.

In some example embodiments, the user 50 may interact with one or more objects in the virtual space.

For example, the user 50 may interact by at least one of approaching one or more objects, touching one or more objects, moving one or more objects, looking in a direction towards one or more objects for a certain threshold time or greater, making a gesture or speaking towards one or more objects, or modifying a parameter associated with the one or more objects. For example, the user 50 may approach an object to view it in greater detail or, in the case of an audio object, hear it with greater clarity. For example, the user 50 may select an object in any suitable way, for example by pointing to the object, touching the object or making a vocal utterance referring to, or in the direction of, the object, and/or may modify a parameter of an object such as by increasing or decreasing the volume of associated audio data and/or by changing its size.

The more the user 50 interacts with a particular object, there is a (higher) likelihood that the user will interact with the object in the future.

For example, if the user 50 interacts with an object more than a threshold number of times, e.g., five times, the object may be identified as being one that the user will interact with again in the future. The threshold number may be a default value and/or may be set/modified by the user 50 or another user. The number of interactions may be recorded over a predetermined time window such that interactions performed outside of the time window, e.g., more than two weeks ago, may be disregarded.

Additionally or alternatively, interactions performed by other users may be used to identify objects that the user 50 is likely to interact with.

In some example embodiments, objects may have associated properties. For example, an object may have an associated property indicative of one or more interaction capabilities, for example the object's ability to perform some action responsive to a user input, for example to move or respond. Additionally, or alternatively, the property (or a different property) may indicate an object type or theme, for example indicating that the object is a musician or football player. An object having a property indicative of one or more interaction capabilities and/or a property which matches an interaction preference of the user 50, such as a preference to interact with musician objects, may be identified as an object that the user is likely to interact with. Other examples may be envisaged.

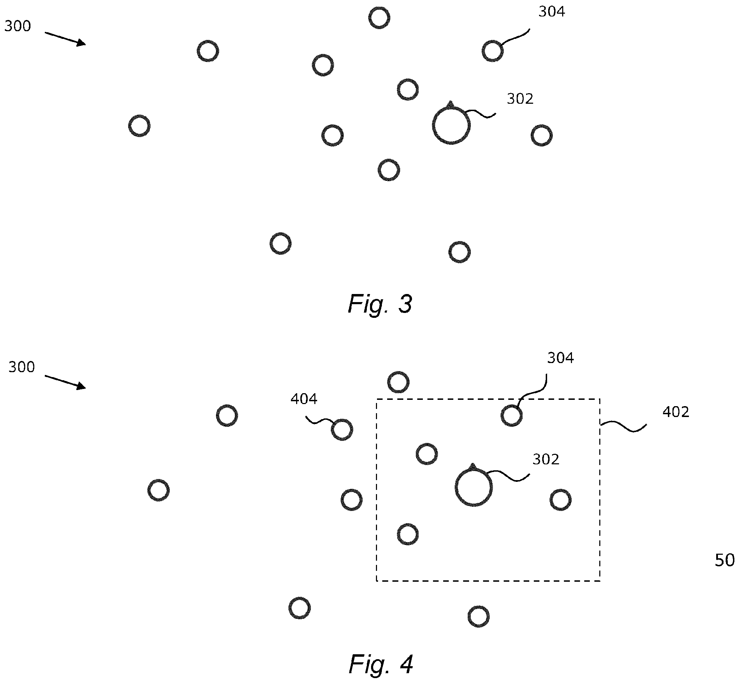

FIG. 3 illustrates a plan view of a virtual space 300 in which a user 302 (which may be the user 50 shown in FIG. 2) may be immersed by means of the FIG. 1 VR display system 1.

The virtual space 300 may comprise a plurality of objects, one of which is indicated by reference numeral 304. The objects have respective positions within the virtual space 300.

The user 302 is shown at a particular position with respect to the virtual space 300 to indicate where in the virtual space the user will perceive themselves to be. The particular position may be a default position that is used when the virtual space 300 is first loaded or first appears, or which may be the last-known position of the user 302 in the virtual space 300. The user 302 may move around the virtual space 300 in the manner described above.

The user 302 will be located in a real-world play area. The term "play area" may be used hereafter. The play area may comprise an area in which the user 302 may move relatively freely. The play area may be defined as an area within a boundary which may comprise one or more physical features such as one or more walls. For example, the play area may comprise a room having one or more walls.

The VR display system 1 may be configured to determine the size and/or shape of the play area. For example, the VR display system 1 may request that the user 302 locates himself or herself in a play area having at least certain dimensions. Alternatively, the VR display system may measure the size and/or shape of the play area in real-time or periodically, for example at the commencement of a session, by use of one or more cameras or other sensors that perform ranging based on light and/or radio waves. Alternatively, the size and/or shape of the play area may be measured by a different device to the VR display system 1. The different device may comprise one or more cameras or other sensors that perform ranging based on light and/or radio waves, wherein the different apparatus transmits data indicating the size and/or shape of the play area to the VR display system 1. For example, the different device may comprise a smartphone or similar.

FIG. 4 illustrates the FIG. 3 virtual space 300 when overlaid onto an example play area 402.

The play area 402 may comprise a rectangular room with dimensions of, for example, 3 x 2 metres (a 6 square metre area) and bounded by four walls.

The virtual space 300 may for example have dimensions 6 x 3 metres (18 square metre area) and hence is larger than the play area in at least one dimension.

It follows that at least some of the virtual space 300 will not fit within the play area 402.

As seen, the initial placement of the virtual space 300 with respect to the play area 402 means that a first object 304 will fit, and so be presented within, the play area 402. However, a second object 404 will not fit, and so will be presented outside of the play area 402. The user 302 may still see and/or hear the second object 404 but the user may not be able to move close to the second object and hence may not be able to fully explore or interact with the second object 404.

Example embodiments may avoid or alleviate such issues in an intuitive way which is not disturbing to the user 302.

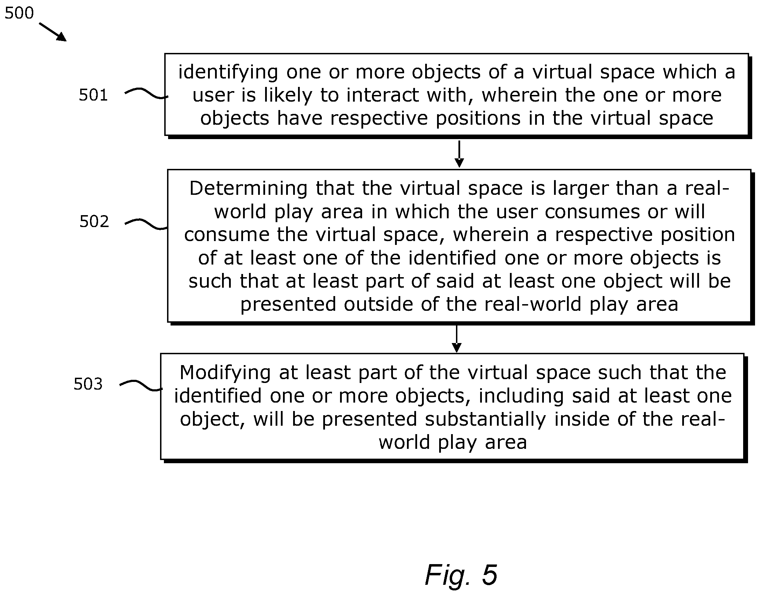

FIG. 5 is a flow diagram showing operations 500 that may be performed by one or more example embodiments. The operations 500 may be performed by hardware, software, firmware or a combination thereof. The operations 500 may be performed by one, or respective, means, a means being any suitable means such as one or more processors or controllers in combination with computer-readable instructions provided on one or more memories. The operations 500 may, for example, be performed by the VR media player 10 of the FIG. 2 example but may be performed by another apparatus that is configured to process data representing a virtual space such that at least part of the virtual space can be modified.

A first operation 501 may comprise identifying one or more objects of a virtual space which a user is likely to interact with, wherein the one or more objects have respective positions in the virtual space.

A second operation 502 may comprise determining that the virtual space is larger than a real-world play area, hereafter play area, in which the user consumes or will consume the virtual space, wherein a respective position of at least one object is such that at least part of said at least one object will be presented outside of the play area.

In some example embodiments, the size and/or shape of the play area may be measured by the apparatus that performs the operations 500 (e.g., the VR media player 10). In this case, said apparatus may determine (or detect) if the virtual space is larger than the play area that it has measured.

Alternatively, the size and/or shape of the play area may be measured by a different device (e.g. a smartphone) which transmits to the apparatus data indicating the size and/or shape of the play area such that the apparatus can determine if the virtual space is larger than the play area that the different device measured.

In either case, the apparatus or different device may comprise one or more cameras or other sensors that perform ranging based on light and/or radio waves and/or a position sensor that determines the size and/or shape of the play area based on position data generated as the user walks around the boundary of the play area.

Alternatively still, the user may manually measure the size and/or shape of the play area and send data indicative of said measurements via a different device, e.g. a smartphone, to the apparatus.

The size and/or shape of the virtual space may be indicated in metadata associated with the data file or stream representing the virtual space.

The term "presented" in this context refers to the outputting or rendering of video and/or audio data such that at least part of an identified object will be perceived by the user as being outside of the play area.

A third operation 503 may comprise modifying at least part of the virtual space such that the identified one or more objects, including said at least one object, will be presented substantially inside of the play area.

For example, the third operation 503 may be performed by the VR media player of FIG. 2 and various examples are given below as to how the modifying may be performed.

The term substantially may mean that a majority of a particular object will be presented within the play area and/or that any part of a particular object that comprises one or more interactive elements, e.g., virtual buttons, will be presented within the play area.

A further operation may comprise providing a heat map associated with the virtual space, wherein the heat map may comprise a two or three -dimensional representation of the virtual space which includes a plurality of objects at respective positions in the virtual space. The first operation 501 in this case may involve updating the heat map to indicate the identified one or more objects that the user is likely to interact with and this process may be re-performed over time as interactions are performed. In some example embodiments, the heat map may simply, or additionally, indicate locations where the user has made interactions or moved close to objects and possibly also locations where one or more other users experiencing the same virtual space have made interactions or moved close to objects. In some example embodiments, the heat map may comprise a set of interaction data indicating positions, e.g., co-ordinates, identifiers of the plurality of objects at their respective positions in the virtual space, and the updatable interaction data. Hence, it is not necessary to provide a graphical two or three-dimensional representation of the virtual space.

For example, the identified one or more objects may be identified in any suitable way, for example by setting a tag or field in metadata associated with the identified one or more objects, recording respective identifiers of the identified one or more objects in a particular part of memory, or similar.

For example, the identified one or more objects may be indicated in a graphical form heat map using a different colour and/or shade than other objects.

In some example embodiments, the identified one or more objects may comprise one or more objects which the user has previously interacted with at least a threshold number *N* of times. For example, the number *N* may be set to five or another number.

Additionally or alternatively, the identified one or more objects may comprise one or more objects which one or more other users have previously interacted with at least a threshold number of times. For example, the number *N* may be set to five or another number.

Additionally or alternatively, the identified one or more objects may comprise one or more objects having at least one associated property that matches an interaction preference of the user, examples or which have been mentioned above.

In some example embodiments, a user, which may comprise the user mentioned in the first operation 501 and/or one or more other users, such as those mentioned above, may be considered to have interacted with one or more objects in the virtual space by at least one of: approaching one or more objects, touching one or more objects, moving one or more objects, looking in a direction towards one or more objects for at least a threshold time period, e.g., of five seconds, making a gesture or speaking towards one or more objects, or modifying a parameter associated with the one or more objects.

In some example embodiments, the second operation 502 may comprise at least determining that the virtual space is larger than the play area by at least one dimension, for example one of X, Y or Z axes which respectively correspond to the length, width and height of the play area.

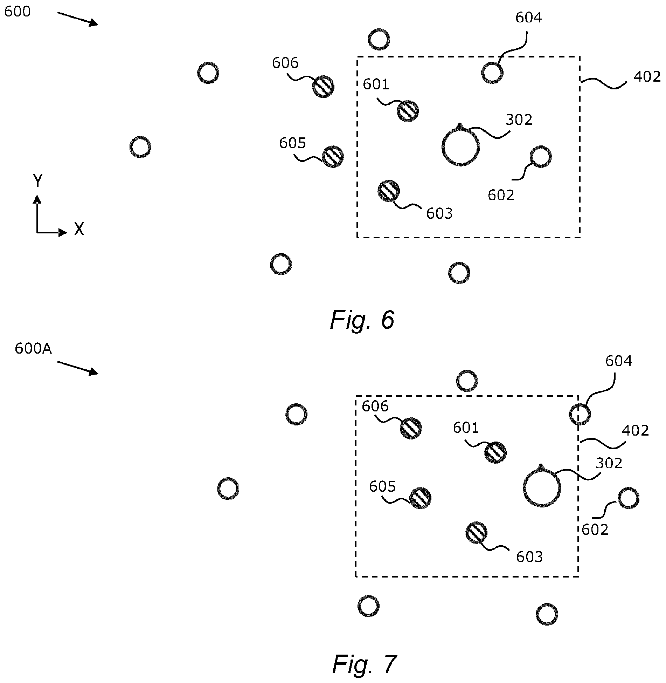

FIG. 6 illustrates a plan view of a virtual space 600 in which the user 302 may be immersed by means of the FIG. 1 VR display system 1.

The virtual space 600 comprises a plurality of objects, including first to sixth objects 601-606 having respective positions within the virtual space 600.

The user 302 is shown at a particular position with respect to the virtual space 600 and to the respective positions of the first to sixth objects 601-606.

A play area 402 of the user 302 is indicated, which assumes that the user 302 is currently located in the approximate centre of the play area.

In accordance with the first operation 501, it may be identified that the first, third, fifth and sixth objects 601, 603, 605, 606 have been interacted with by the user 302 at least a threshold number *N* of times.

For example, FIG. 6 may comprise a heat map in which the first, third, fifth and sixth objects 601, 603, 605, 606 are indicated different from the other objects, in this case with shading.

In accordance with the second operation 502, it may be determined that the virtual space 600 is larger than the play area 402, in this case along both X and Y axes, and that the respective positions of the fifth and sixth objects 605, 606 are such that the fifth and sixth objects will be presented outside of the play area 402.

In accordance with the third operation 503, at least part of the virtual space 600 is modified such that the first, third, fifth and sixth objects 601, 603, 605, 606 will be presented within the play area 402.

For example, the third operation 503 may comprise determining a crop area of the virtual space 600, associated with the user position with respect to the virtual space, wherein the crop area corresponds to, or will fit within, the play area 402.

For example, the crop area may comprise the same shape and dimensions as the play area 402, which will be assumed hereinafter. In other embodiments, the crop area may be smaller than the play area 402.

The modifying may then comprise one or more modifications which moves at least the fifth and sixth objects 605, 606 within the crop area, and hence the play area 402, whilst leaving the first and third objects 601, 603 within the crop area/play area.

For example, the virtual space 600 may be modified by moving the virtual space with respect to the crop area/play area 402 such that the respective positions of the first, third, fifth and sixth objects 601, 603, 605, 606 are substantially within the crop area/play area.

As shown, this may first comprise determining that the respective positions of the outermost ones of the first, third, fifth and sixth objects 601, 603, 605, 606 along both the X and Y axes will fit within the crop area/play area 402.

If so, and as shown in FIG. 7, the virtual space 600 can be modified to become modified virtual space 600A by moving the virtual space (in the appropriate rightwards direction and by the appropriate amount) with respect to the crop area/play area 402.

The second and fourth objects 602, 604 are no longer within the crop area/play area 402 but are of little or no interest to the user 302.

In some example embodiments, objects outside of the crop area/play area 402 may be de-emphasized, for example by attenuating or muting their audio data and/or by removing or shrinking their appearance.

In some example embodiments, an object may be determined in the second operation 502 if only part of it is outside of the crop area/play area 402. This may be the case for larger objects, for example. For example, this may be the case if a majority of an object is outside the crop area/play area 402, or one or more interactive elements of the object are outside the crop area/play area.

In some example embodiments, the modifying may comprise moving the sixth object 606 so that it is substantially, or mostly, within the crop area/play area 402. This may be appropriate for larger objects which, for example, comprise an interactive portion facing the user 302 that is moved within the crop area/play area 402 but the remainder of which comprises no interactive portions and so can remain outside of the crop area/play area.

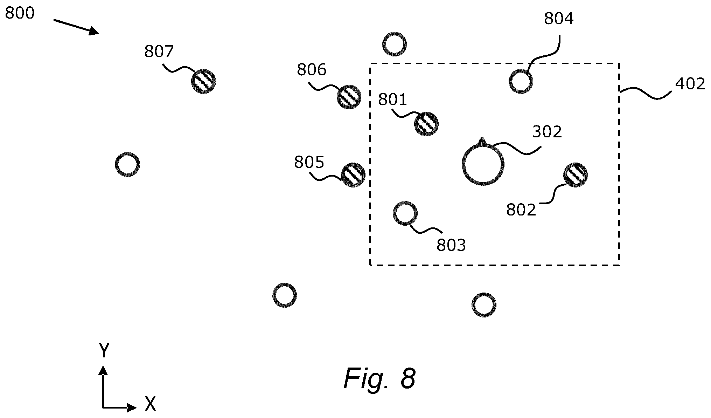

FIG. 8 illustrates a plan view of another virtual space 800 in which the user 302 may be immersed by means of the FIG. 1 VR display system 1.

The virtual space 800 comprises a plurality of objects, including first to seventh objects 801-807 having respective positions within the virtual space.

The user 302 is shown at a particular position with respect to the virtual space 800 and respective positions of the first to seventh objects 801-807.

A play area 402 of the user 302 is indicated, which assumes that the user 302 is currently located in the approximate centre of the play area.

In accordance with the first operation 501, it may be identified that first, second, fifth, sixth and seventh objects 801, 802, 805, 806, 807 have been interacted with by the user 302 at least a threshold number N of times.

For example, FIG. 8 may comprise a heat map in which the first, second, fifth, sixth and seventh objects 801, 802, 805, 806, 807 are indicated different from the other objects, in this case with shading.

In accordance with the second operation 502, it may be determined that the virtual space 800 is larger than the play area 402 and that the respective positions of the fifth, sixth and seventh objects 805, 806, 807 are such that they will be presented outside of the play area 402.

In accordance with the third operation 503, at least part of the virtual space 800 is modified such that the first, second, fifth, sixth and seventh objects 801, 802, 805, 806, 807 will be presented substantially within the play area 402.

For example, the third operation 503 may comprise determining a crop area of the virtual space 800 wherein the crop area corresponds to, or will fit within, the play area 402. For example, as before, the crop area may comprise the same shape and dimensions as the play area 402. In other embodiments, the crop area may be smaller than the play area 402.

The modifying may then comprise one or more modifications which moves at least the fifth, sixth and seventh objects 805, 806, 807 substantially within the crop area, and hence the play area 402, whilst leaving the first and second objects 801, 802 within the crop area/play area.

In this case, it may be determined that the respective positions of the outermost ones of the first, second, fifth, sixth and seventh objects 801, 802, 805, 806, 807 along the X axis will not fit within the crop area/play area 402. Hence the earlier modification method cannot be used, at least not on its own.

Rather, the virtual space 800 may be modified by reducing a scale of at least part of the virtual space such that the respective positions of the first, second, fifth, sixth and seventh objects 801, 802, 805, 806, 807 are within the crop area/play area 402. In some example embodiments, the scale may be reduced in only one dimension, if required.

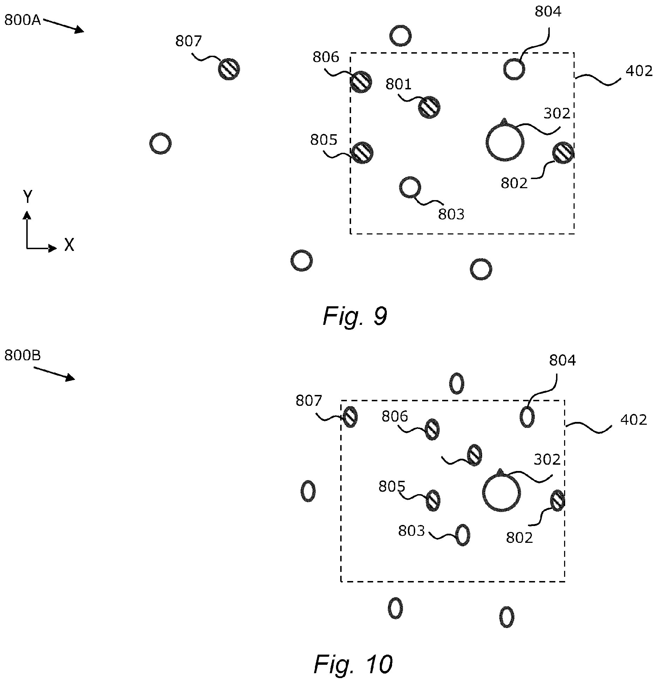

In some example embodiments, an earlier operation may comprise modifying the virtual space 800 by moving the virtual space 800 with respect to the crop area/play area 402 such that the respective positions of as many as possible of the first, second, fifth, sixth and seventh objects 801, 802, 805, 806, 807 are within the crop area/play area. For example, FIG. 9 illustrates that the virtual space 800 may be moved with respect to the crop area/play area 402 such that the first, second, fifth and sixth objects 801, 802, 805, 806 are within the crop area/play area. The result is a first modified virtual space 800A. The seventh object 807 remains outside of the crop area/play area 402. It may be identified that a reduction in scale along only the X axis is required such that the seventh object 807 will be within the crop area/play area 402.

FIG. 10 illustrates a result of a scale reduction along the X axis. The result is a second modified virtual space 800B.

In some example embodiments, objects outside of the crop area/play area 402 may be de-emphasized, for example by attenuating or muting their audio data and/or by removing or shrinking their appearance.

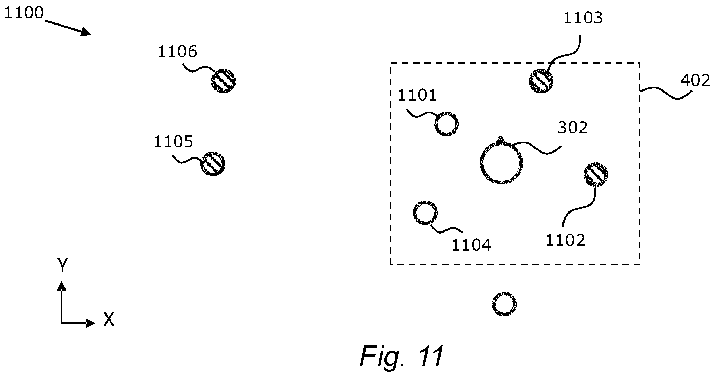

FIG. 11 illustrates a plan view of another virtual space 1100 in which the user 302 may be immersed by means of the FIG. 1 VR display system 1.

The virtual space 1100 comprises a plurality of objects, including first to sixth objects 1101-1106 having respective positions within the virtual space.

The user 302 is shown at a particular position with respect to the virtual space 1100 and the respective positions of the first to sixth objects 1101-1106.

A play area 402 of the user 302 is indicated, which assumes that the user 302 is currently located in the approximate centre of the play area.

In accordance with the first operation 501, it may be identified that the second, third, fifth and sixth objects 1102, 1103, 1105, 1106 have been interacted with by the user 302 at least a threshold number *N* of times.

For example, FIG. 11 may be considered a heat map in which the second, third, fifth and sixth objects 1102, 1103, 1105, 1106 are indicated different from the other objects, in this case with shading.

In accordance with the second operation 502, it may be determined that the virtual space 1100 is larger than the play area 402 and that the respective positions of the identified second, third, fifth and sixth objects 1102, 1103, 1105, 1106 are such that the fifth and sixth objects will be presented outside of the play area 402.

In accordance with the third operation 503, at least part of the virtual space 1100 is modified such that each of the second, third, fifth and sixth objects 1102, 1103, 1105, 1106 will be presented within the play area 402.

For example, the third operation 503 may again comprise determining a crop area of the virtual space 1100 wherein the crop area corresponds to, or will fit within, the play area 402. For example, as before, the crop area may comprise the same shape and dimensions as the play area 402.

The modifying may then comprise one or more modifications which moves at least the fifth and sixth objects 1105, 1106, within the crop area, and hence the play area 402, whilst leaving the second and third objects 1102, 1103 within the crop area/play area.

In this case, it may be determined that the respective positions of the outermost ones of the second, third, fifth and sixth objects 1102, 1103, 1105, 1106 along the X axis will not fit within the crop area/play area 402. Hence the earlier modification method, described with reference to FIGs. 6 and 7 cannot be used, at least not on its own.

Rather, the virtual space 1100 may be modified by identifying at least one insignificant region within the crop area/play area 402 between the user position and the respective position(s) of the objects outside of the crop area/play area, in this case the fifth and sixth objects 1105, 1106. The respective positions of the fifth and sixth objects 1105, 1106 may be moved into the insignificant region, which may mean effectively replacing the insignificant region or shrinking it at least along the X axis. It will be appreciated that the insignificant region in other examples may have any size and/or shape and/or direction with respect to the user position, so long as the insignificant region is between the user position and the respective position(s) of the object(s) outside of the crop area/play area 402. In some example embodiments, there may be a plurality of insignificant regions.

An insignificant region in this context may comprise, for example, at least one of: a region associated with an object which is other than the identified one or more objects (for example a region associated with an object that has not been interacted with by the user or one or more other users, either at all or less than a threshold number of times); or a region that comprises no objects.

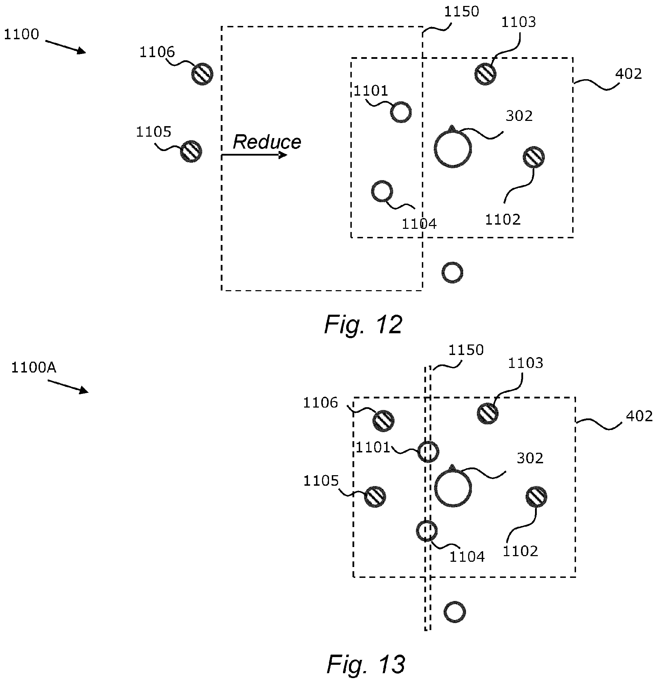

FIG. 12 illustrates identification of an insignificant region 1150 between the user 302 and the fifth and sixth objects 1105, 1106. The first and fourth objects 1101, 1104 have either not been interacted with by the user 302 (or another user) or have been interacted with by the user (or another user) less than a threshold number of times.

Hence, their associated regions or locations are considered insignificant, as is the remaining space that comprises no objects.

FIG. 13 illustrates a modified virtual space 1100A in which the fifth and sixth objects 1105, 1106 are moved into the insignificant region 1150. The insignificant region 1150 may be removed or reduced in size along the X axis until the outermost, fifth object 1105 is within the crop area/play area 402. As shown in FIG. 13, in the case that the insignificant region 1150 is reduced in size, the first and fourth objects 1101, 1104 may be seen and/or heard at modified respective positions and optionally their respective audio and/or video data may be modified, for example by muting or attenuating their audio and/or shrinking their appearance.

In some example embodiments, objects outside of the crop area/play area 402 may be de-emphasized, for example by attenuating or muting their audio data and/or by removing or shrinking their appearance.

Example embodiments enable a virtual space which is too large to fit within a user's play area to be modified, by means of processing of the audio and/or video data representing the virtual space, in such a way that one or more objects that a user is likely to interact with will be presented to the user. In some example embodiments, a heat map may be provided and maintained such that identified objects that are likely to be interacted with can be represented in a two or three-dimensional way with respect to a play area or crop area and the virtual space dynamically modified based on updates to the heat map, which may change (e.g., accumulate or reduce) over time. The modification can be performed in an intuitive an unobtrusive way using various methods.

### Example Apparatus

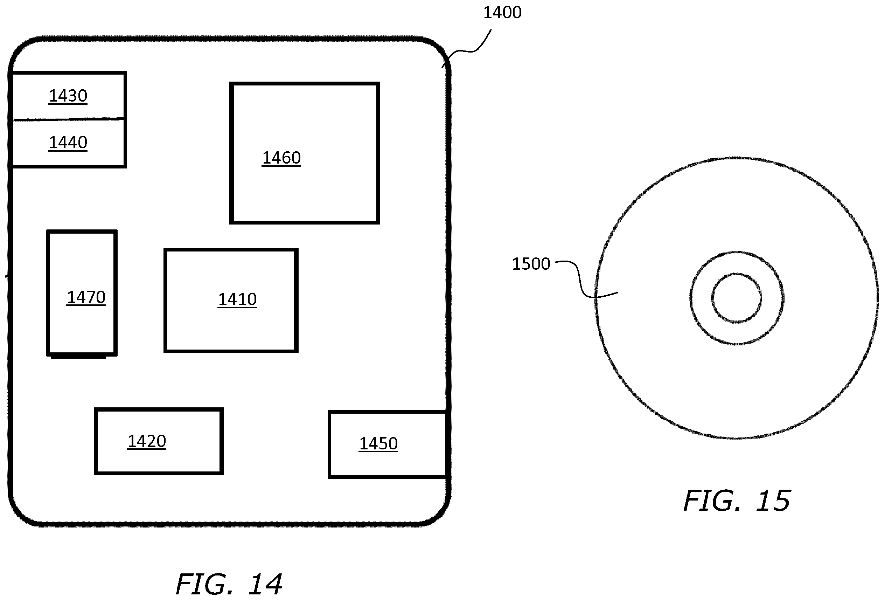

FIG. 14 illustrates an example apparatus 1400 capable of supporting at least some embodiments. Illustrated is a device 1400, which may the VR media player 10 or other device. Comprised in device 1400 is a processor 1410, which may comprise, for example, a single- or multi-core processor wherein a single-core processor comprises one processing core and a multi-core processor comprises more than one processing core. The processor 1410 may comprise, in general, a control device. The processor 1410 may comprise more than one processor. The processor 1410 may be a control device. A processing core may comprise, for example, a Cortex-A8 processing core manufactured by ARM Holdings or a Steamroller processing core produced by Advanced Micro Devices Corporation. The processor 1410 may comprise at least one Qualcomm Snapdragon and/or Intel Atom processor. The processor 1410 may comprise at least one Application-Specific Integrated Circuit, ASIC. The processor 1410 may comprise at least one Field-Programmable Gate Array, FPGA. The processor 1410 may be means for performing method steps in device 1400. The processor 1410 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, or a device configured to control the functioning thereof, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The device 1400 may comprise a memory 1420. The memory 1420 may comprise random access memory and/or permanent memory. The memory 1420 may comprise at least one RAM chip. The memory 1420 may comprise solid-state, magnetic, optical and/or holographic memory, for example. The memory 1420 may be at least in part accessible to processor 1410. The memory 1420 may be at least in part comprised in processor 1410. The memory 1420 may be means for storing information. The memory 1420 may comprise computer instructions that processor 1410 is configured to execute. When computer instructions configured to cause the processor 1410 to perform certain actions are stored in the memory 1420, and the device 1400 overall is configured to run under the direction of the processor 1410 using computer instructions from the memory 1420, the processor 1410 and/or its at least one processing core may be considered to be configured to perform said certain actions. The memory 1420 may be at least in part comprised in the processor 1410. The memory 1420 may be at least in part external to the device 1400 but accessible to the device 1400.

The device 1400 may comprise a transmitter 1430. The device 1400 may comprise a receiver 1440. The transmitter 1430 and the receiver 1440 may be configured to transmit and receive, respectively, information in accordance with at least one cellular or non-cellular standard.

The transmitter 1430 may comprise more than one transmitter. The receiver 1440 may comprise more than one receiver. The transmitter 1430 and/or the receiver 1440 may be configured to operate in accordance with Global System for Mobile Communication, GSM, Wideband Code Division Multiple Access, WCDMA, 5G/NR, 5G-Advanced, i.e., NR Rel-18, 19 and beyond, Long Term Evolution, LTE, IS-95, Wireless Local Area Network, WLAN, Ethernet and/or Worldwide Interoperability for Microwave Access, WiMAX, standards, for example.

The device 1400 may comprise a Near-Field Communication, NFC, transceiver 1450. The NFC transceiver 1450 may support at least one NFC technology, such as NFC, Bluetooth, Wibree or similar technologies.

The device 1400 may comprise a User Interface, UI, 1460. The UI 1460 may comprise at least one of a display, a keyboard, a touchscreen, a vibrator arranged to signal to a user by causing device 1400 to vibrate, a speaker and a microphone. A user may be able to operate the device 1400 via the UI 1460, for example to accept incoming telephone calls, to originate telephone calls or video calls, to browse the Internet, to manage digital files stored in memory 1420 or on a cloud accessible via the transmitter 1430 and the receiver 1440, or via NFC transceiver 1450, and/or to play games.

The device 1400 may comprise or be arranged to accept a user identity module 1470.

The user identity module 1470 may comprise, for example, a Subscriber Identity Module, SIM, card installable in device 1400. The user identity module 1470 may comprise information identifying a subscription of a user of device 1400. The user identity module 1470 may comprise cryptographic information usable to verify the identity of a user of device 1400 and/or to facilitate encryption of communicated information and billing of the user of the device 1400 for communication effected via device 1400.

The processor 1410 may be furnished with a transmitter arranged to output information from processor 1410, via electrical leads internal to the device 1400, to other devices comprised in the device 1400. Such a transmitter may comprise a serial bus transmitter arranged to, for example, output information via at least one electrical lead to the memory 1420 for storage therein. Alternatively to a serial bus, the transmitter may comprise a parallel bus transmitter.

Likewise, the processor 1410 may comprise a receiver arranged to receive information in The processor 1410, via electrical leads internal to the device 1400, from other devices comprised in the device 1400. Such a receiver may comprise a serial bus receiver arranged to, for example, receive information via at least one electrical lead from the receiver 1440 for processing in the processor 1410. Alternatively to a serial bus, the receiver may comprise a parallel bus receiver.

The device 1400 may comprise further devices not illustrated in Figure 14. For example, where the device 1400 comprises a smartphone, it may comprise at least one digital camera. Some devices 1400 may comprise a back-facing camera and a front-facing camera, wherein the back-facing camera may be intended for digital photography and the front-facing camera for video telephony. The device 1400 may comprise a fingerprint sensor arranged to authenticate, at least in part, a user of the device 1400. In some embodiments, the device 1400 lacks at least one device described above. For example, some devices 1400 may lack a NFC transceiver 1450 and/or user identity module 1470.

The processor 1410, memory 1420, transmitter 1430, receiver 1440, NFC transceiver 1450, UI 1460 and/or user identity module 1470 may be interconnected by electrical leads internal to the device 1400 in a multitude of different ways. For example, each of the aforementioned devices may be separately connected to a master bus internal to the device 1400, to allow for the devices to exchange information. However, as the skilled person will appreciate, this is only one example and depending on the embodiment various ways of interconnecting at least two of the aforementioned devices may be selected without departing from the scope of the present invention.

Figure 15 shows a non-transitory media 1500 according to some embodiments. The non-transitory media 1500 is a computer readable storage medium. It may be e.g. a CD, a DVD, a USB stick, a blue ray disk, etc. The non-transitory media 1500 stores computer program instructions, causing an apparatus to perform the method of any preceding process for example as disclosed in relation to the flow diagrams in this specification and related features thereof.

The described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependant claims are mutually freely combinable unless otherwise explicitly stated. Furthermore, it is to be understood that the use of "a" or "an", that is, a singular form, throughout this document does not exclude a plurality.

## Claims

1. An apparatus, comprising:
means for identifying one or more objects of a virtual space which a user is likely to interact with, wherein the one or more objects have respective positions in the virtual space;
means for determining that the virtual space is larger than a real-world play area in which the user consumes or will consume the virtual space, wherein a respective position of at least one object of the identified one or more objects is such that at least part of said at least one object will be presented outside of the real-world play area; and
means for modifying at least part of the virtual space such that the identified one or more objects, including said at least one object, will be presented substantially inside of the real-world play area.

2. The apparatus of claim 1, wherein
the identified one or more objects of the virtual space comprise one or more objects which the user has previously interacted with at least a threshold number of times and/or one or more other users have previously interacted with at least a threshold number of times.

3. The apparatus of any preceding claim, wherein
the identified one or more objects of the virtual space comprise one or more objects having at least one associated property that matches an interaction preference of the user.

4. The apparatus of any preceding claim, further comprising:
means for providing a heat map associated with the virtual space, wherein the heat map comprises a two or three -dimensional representation of the virtual space, which includes a plurality of objects at respective positions in the virtual space, at least some of which is or are updated to indicate the identified one or more objects of the virtual space.

5. The apparatus of any preceding claim, wherein
the modifying comprises:
determining a crop area of the virtual space, associated with a user position with respect to the virtual space, wherein the crop area corresponds to, or will fit within, the real-world play area,
wherein at least part of the virtual space is modified such that the respective positions of the identified one or more objects, including said at least one object, are substantially within the crop area.

6. The apparatus of claim 5, wherein
the virtual space is modified by moving at least part of the virtual space with respect to the crop area such that the respective positions of the identified one or more objects, including said at least one object, are substantially within the crop area.

7. The apparatus of claim 5, wherein
the virtual space is modified by:
identifying at least one insignificant region within the crop area between the user position and the respective position of said at least one object, and
moving the respective position of said at least one object into the identified at least one insignificant region.

8. The apparatus of claim 7, wherein
the at least one insignificant region comprises at least one of:
a region associated with an object which is other than the identified one or more objects; or
a region that comprises no objects.

9. The apparatus of any of claims 5 to 8, wherein
the virtual space is modified by reducing a scale of at least part of the virtual space such that the respective positions of the identified one or more objects, including said at least one object, are within the crop area.

10. The apparatus of claim 9, wherein
the virtual space is modified by reducing a scale of only one dimension of the at least part of the virtual space.

11. The apparatus of any preceding claim, wherein
the identified one or more objects of the virtual space comprise one or more objects which the user has previously interacted with, and/or one or more other users have previously interacted with, in the virtual space by at least one of:
approaching the one or more objects;
touching the one or more objects;
moving the one or more objects;
looking in a direction towards the one or more objects for at least a threshold time;
making a gesture or speaking towards the one or more objects; or
modifying a parameter associated with the one or more objects.

12. The apparatus of any preceding claim, wherein
the one or more objects of the virtual space comprise one or more audio and/or video objects.

13. The apparatus of any preceding claim, wherein
the apparatus is comprised in a user device.

14. A method comprising:
identifying one or more objects of a virtual space which a user is likely to interact with, wherein the one or more objects have respective positions in the virtual space;
determining that the virtual space is larger than a real-world play area in which the user consumes or will consume the virtual space, wherein a respective position of at least one object of the identified one or more objects is such that at least part of said at least one object will be presented outside of the real-world play area; and
modifying at least part of the virtual space such that the identified one or more objects, including said at least one object, will be presented substantially inside of the real-world play area.

15. A non-transitory computer-readable medium having stored thereon computer-readable code, which, when executed by at least one processor, causes the at least one processor to perform a method, comprising:
identifying one or more objects of a virtual space which a user is likely to interact with, wherein the one or more objects have respective positions in the virtual space;
determining that the virtual space is larger than a real-world play area in which the user consumes or will consume the virtual space, wherein a respective position of at least one object of the identified one or more objects is such that at least part of said at least one object will be presented outside of the real-world play area; and
modifying at least part of the virtual space such that the identified one or more objects, including said at least one object, will be presented substantially inside of the real-world play area.
